# EUROPEAN PATENT APPLICATION

(11) **EP 3 970 567 A1**
(43) Date of publication of application: **23.03.2022**
(21) Application number: 20847085.6
(22) Date of filing: 29.06.2020
(51) Int. Cl.: A47C 31/02, B68G 7/052, B60N 2/58

(54) **SEAT**

(30) Priority: 30.07.2019 JP 2019139847
(71) Applicant: Delta Kogyo Co., Ltd., Aki-gun, Hiroshima 735-8501 (JP)
(72) Inventor: TAKAMURA, Rina, Aki-gun, Hiroshima 735-8501 (JP); ONJI, Atsushi, Aki-gun, Hiroshima 735-8501 (JP)
(74) Representative: Rupprecht, Kay
(86) International application number: PCT/JP2020/025593
(87) International publication number: WO 2021/020000

(57) **Abstract**

An object is to provide a seat capable of creating a shape conforming to a curved surface of a pad. A seat (1) includes: a pad (2) having a first surface (2b) formed of a curved surface and a second surface (2a) formed of a flat surface; an outer cover (3) covering the pad (2), the outer cover (3) having an inward-suspending portion (4) inwardly suspended in the pad (2); and a holding member (5) having bending-allowing elasticity, the holding member (5) holding a shape of the inward-suspending portion (4). The inward-suspending portion (4) extends continuously from the first surface (2b) to the second surface (2a) of the pad (2). The holding member (5) is fixed to a part of the inward-suspending portion (4), the part extending continuously from the first surface (2b) to the second surface (2a) of the pad (2). The inward-suspending portion (4) is fastened only to the second surface (2a) of the pad (2), and is disposed on the first surface (2b) in a state of the inward-suspending portion (4) being bent together with the holding member (5) along the curved surface of the first surface (2b).

## Description

### Technical Field

The present invention relates to a seat including a pad and an outer cover.

### Background Art

A seat such as a general automobile seat adopts, at its seat cushion or seat back, a seat structure in which the outer surface of a pad made of a foamed resin or the like is covered with an outer cover made of a leather, a vinyl sheet, or the like. The outer cover has an inward-suspending portion inwardly suspended in a groove of the pad.

For example, according to an automobile seat described in Patent Literature 1, the surface of a pad of a seat cushion has a shape in which a flat surface and a curved surface are continuous with each other. An inward-suspending portion of an outer cover is inwardly suspended in a groove formed continuously across the flat surface and the curved surface of the pad.

Usually, a solid wire is fixed to the inward-suspending portion along its outline, by sewing or other methods. The solid wire is drawn into the groove of the pad and is fastened with a hogring or the like. By this process, the inward-suspending portion can be formed into a shape conforming to the shape of the pad surface.

However, as described above, when the solid wire is drawn into the groove of the pad to form the inward-suspending portion into the given shape conforming to the shape of the pad surface, causing the solid wire to follow a flexible trimmed curved surface portion may be difficult on a part of pad where the flat surface and the curved surface are continuous with each other because of, for example, the rigidity of the solid wire. Therefore, creating a clear inward-suspending shape conforming to a curved surface is difficult.

Particularly, in a recent seat corresponding to ISO-FIX standard, a curved surface with a small curvature radius is present on the pad surface around a part to be connected to a connector of a child seat. Such a curved surface makes drawing in the solid wire further difficult, thus bringing about further difficulty in obtaining the inward-suspending shape conforming to the curved surface.

### Citation List

### Patent Literature

Patent Literature 1: Japanese Patent No. 6276042

### Summary of Invention

An object of the present invention is to provide a seat capable of creating an inward-suspending shape conforming to a curved surface of a pad.

In order to solve the above problems, a seat of the present invention includes: a pad having a first surface formed of a curved surface with a given curvature radius and a second surface formed of a curved surface with a curvature radius larger than that of the first surface or formed of a flat surface; an outer cover that covers the pad, the outer cover having an inward-suspending portion projecting from a side facing the pad toward the pad and inwardly suspended in the pad; and a holding member having bending-allowing elasticity, the holding member holding a shape of the inward-suspending portion (specifically, a shape of the inward-suspending portion and of the outer cover around the inward-suspending portion). The inward-suspending portion extends continuously from the first surface to the second surface of the pad. The holding member is fixed to a part of the inward-suspending portion, the part extending continuously from the first surface to the second surface of the pad. The inward-suspending portion is fastened only to the second surface of the pad, and is disposed on the first surface in a state of the inward-suspending portion being bent together with the holding member along the curved surface of the first surface.

### Brief Description of Drawings

FIG. 1 is a perspective view schematically showing a seat cushion of an automobile seat according to an embodiment of a seat of the present invention;
FIG. 2 is an enlarged perspective view showing a part of the seat cushion of FIG. 1 where an inward-suspending portion of an outer cover continuously extends from a flat surface portion to a curved surface portion of a pad;
FIG. 3 is an overall perspective view of a holding member configured to be fixed to the inward-suspending portion of FIG. 2, the holding member having a plate portion of a wavy irregular shape;
FIG. 4 is an overall perspective view of another example of the holding member illustrated as a modification of the present invention, the holding member configured to be fixed to the inward-suspending portion of FIG. 2, the holding member having a plate portion of a shape made up of a series of trapezoidal projections;
FIG. 5 is a perspective explanatory view showing a state in which the holding member of FIG. 3 is fixed to the inward-suspending portion of FIG. 2;
FIG. 6 is a cross-sectional view of the inward-suspending portion of the outer cover and the holding member that extend along a curved surface portion of the pad, the cross-sectional view being taken along a line VI-VI in FIG. 5;
FIG. 7 is a cross-sectional view of the interior of a space formed on the curved surface portion of the pad, the cross-sectional view being taken along line VI-VI in FIG. 5, showing a view for describing that the inward-suspending portion and the holding member move into the space because of a restitutive force of the holding member; and
FIG. 8 is a perspective explanatory view for describing that the inward-suspending portion and the holding member of FIG. 5 move into the space because of the restitutive force of the holding member.

### Description of Embodiments

A preferred embodiment of the present invention will hereinafter be described with reference to the drawings.

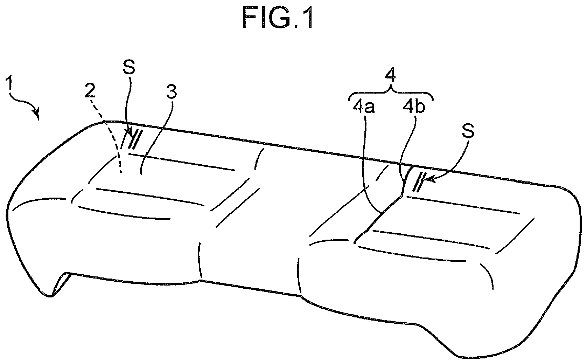

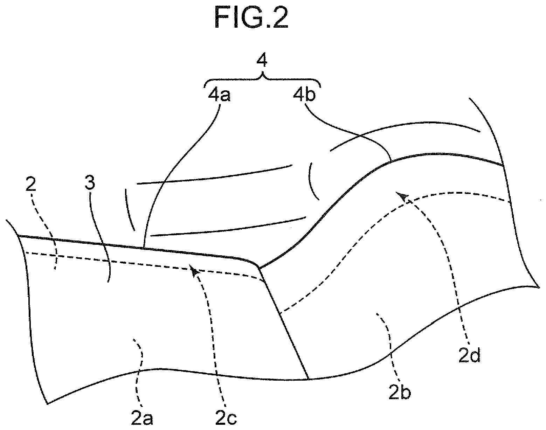

As shown in FIG. 1, an automobile seat 1as an embodiment of a seat of the present invention, includes a seat cushion that supports the buttocks of a seated person. As shown in FIGS. 1 and 2, the seat cushion includes a pad 2 and an outer cover 3 covering the surface of the pad 2. The automobile seat 1 of FIG. 1 includes a seat back that supports the back of the seated person. This seat back, however, is omitted from FIG. 1.

The pad 2 is a soft member fabricated by integrally molding a foaming resin, such as urethane. As shown in FIG. 2, the pad 2 has a flat surface portion 2a (a second surface) and a curved surface portion 2b (a first surface). The flat surface portion 2a is a portion that supports the buttocks of the seated person sitting on the seat 1. The curved surface portion 2b is a portion that is continuous with the flat surface portion 2a at its rear side (right side in FIG. 2) and that rises in a semi-cylindrical shape. This curved surface portion 2b has an opening (not illustrated) or the like through which a connector of a child seat can be fitted.

In this embodiment, the curved surface portion 2b corresponds to the first surface of the present invention, the first surface having a given curvature radius. The flat surface portion 2a corresponds to the second surface of the present invention, the second surface having a curvature radius larger than that of the curved surface portion 2b (the first surface), that is, the flat surface portion 2a is gently curved or flat. In this embodiment, the flat surface portion 2a formed of a flat surface is adopted as the second surface. In place of such a flat surface portion 2a, however, a gentle curved surface with a curvature radius larger than that of the curved surface portion 2b may be adopted as the second surface.

On the flat surface portion 2a and the curved surface portion 2b of the pad 2, a groove 2c and a space 2d are formed respectively in succession, as recesses corresponding to an inward-suspending portion 4 of the outer cover 3. The groove 2c formed on the flat surface portion 2a and the space 2d formed on the curved surface portion 2b extend in the front-to-rear direction of the seat 1 (left-to-right direction in FIG. 2).

The space 2d has a sectional area larger than that of the groove 2c. More specifically, the space 2d is a space in which a child seat fitting portion connectable to a metal fitting of the child seat, which will be described later, can be stored. This space 2d has a size that allows the inward-suspending portion 4 to move into the space 2d by means of the holding member 5 with the inward-suspending portion 4 receiving a restitutive force of the holding member 5.

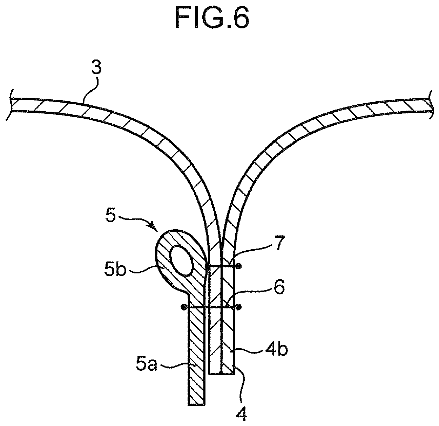

The outer cover 3 is a member formed of a single layer of a filmy material, such as leather, synthetic leather, and fabric, or formed of two or more layers of a filmy material including nonwoven fabric, foamed resin, or the like. The outer cover 3 is formed by joining together ends of a plurality of filmy materials by sewing (see a sewn portion 7 in FIG. 6) or the like. A portion where ends of adjacent filmy materials are joined together by the sewn portion 7 forms the inward-suspending portion 4. In other words, the outer cover 3 has the inward-suspending portion 4 (see FIG. 6) that projects from a side facing the pad 2 (lower side in FIG. 2) toward the pad 2 and that is inwardly suspended (drawn) in the pad 2.

The inward-suspending portion 4 has a part extending continuously from the flat surface portion 2a to the curved surface portion 2b of the pad 2. Specifically, as shown in FIG. 2, the inward-suspending portion 4 of this embodiment has a straight portion 4a that is inserted in the groove 2c of the flat surface portion 2a of the pad 2 and that linearly extends along the groove 2c, and a curved portion 4b that is disposed in the space 2d of the curved surface portion 2b of the pad 2 and that extends in a curved shape along the curved surface portion 2b because of the restitutive force of the holding member 5 (specifically, the restitutive force of a reinforcing portion 5b, which will be described later).

As shown in FIG. 1, on a part of outer cover 3 that covers the curved surface portion 2b (first surface) of the pad 2, a slit S, into which the metal fitting (specifically, the connector of the ISOFIX-standard child seat) for fitting the child seat to the seat is inserted, is formed in a place close to the inward-suspending portion 4 (specifically, close to the curved portion 4b) and communicating with the space 2d of the pad 2. The slit S extends in parallel with the curved portion 4b of the inward-suspending portion 4.

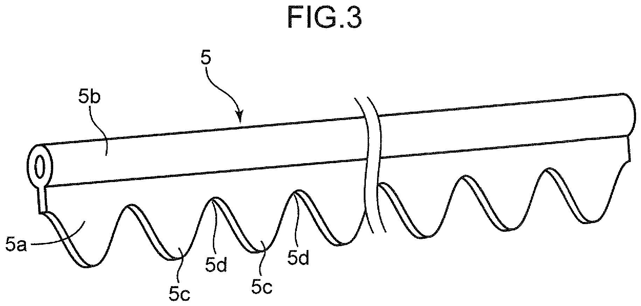

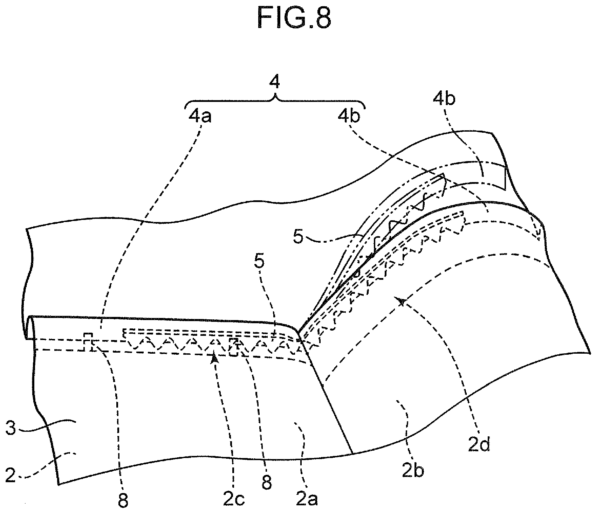

As shown in FIGS. 3 to 8, the seat 1 of this embodiment includes the holding member 5 that holds the shape of the inward-suspending portion 4 of the outer cover 3.

The holding member 5 has bending-allowing elasticity and is configured to be capable of holding the shape of the inward-suspending portion 4.

Specifically, as shown in FIG. 3, the holding member 5 is an elongated member extending along the inward-suspending portion 4, and has a plate portion 5a and the reinforcing portion 5b that reinforces the plate portion 5a. The plate portion 5a and the reinforcing portion 5b are formed integrally out of a resin having bending-allowing elasticity.

The plate portion 5a is an elongated tabular portion extending along the inward-suspending portion 4. In a state of being in surface contact with the inward-suspending portion 4, the plate portion 5a is fixed to the inward-suspending portion 4. The present invention puts no limits on methods of fixing the plate portion 5a to the inward-suspending portion 4, however, as shown in FIG. 6, the plate portion 5a is sewn onto the inward-suspending portion 4 with a thread to form the sewn portion 6, where the plate portion 5a is fixed. Fixing methods other than sewing can be adopted, which include heat sealing and bonding. It is preferable that the holding member 5 be made of a material, such as a resin, having hardness that at least allows sewing of the plate portion 5a (namely, the plate portion 5a is penetratable by a needle.).

The plate portion 5a in FIG. 3 has slits or recesses 5d that allow the plate portion 5a to be bent along the curved surface of the curved surface portion 2b of the pad 2. Specifically, the plate portion 5a has a wavy shape on its lower end part, the wavy shape being formed of projections 5c and the recesses 5d arranged alternately in succession. The interval (pitch) between adjacent recesses 5d (or adjacent projections 5c) is determined to be about 12 mm.

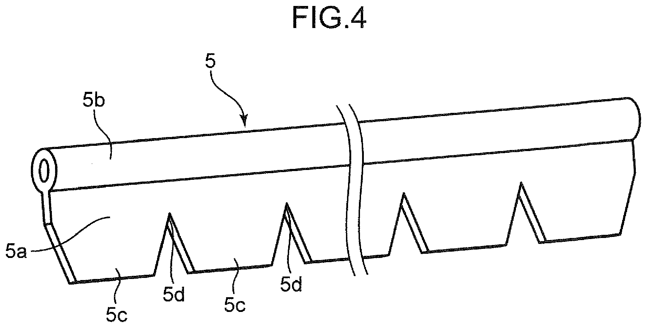

It should be noted that what is required for the shape of the plate portion 5a is to have the slits or recesses 5d that allow the plate portion 5a to be bent along the curved surface of curved surface portion 2b of pad 2. The shape of the plate portion 5a is, therefore, not limited to the above wavy shape. A modification of the present invention, for example, is shown in FIG. 4. As shown in FIG. 4, the plate portion 5a may be formed of trapezoidal projections 5c and wedge-shaped slits 5d that are arranged alternately in succession.

The reinforcing portion 5b is connected to the plate portion 5a continuously along the longitudinal direction of the plate portion 5a. The reinforcing portion 5b is structured to have flexural rigidity higher than that of the plate portion 5a so that the reinforcing portion 5b can reinforce the plate portion 5a. For example, the reinforcing portion 5b shown in FIGS. 3 and 4 has a cylindrical shape or an elliptic cylindrical shape. The reinforcing portion 5b has, for example, a vertically oblong elliptic section of 5 mm in major axis and 3 mm in minor axis.

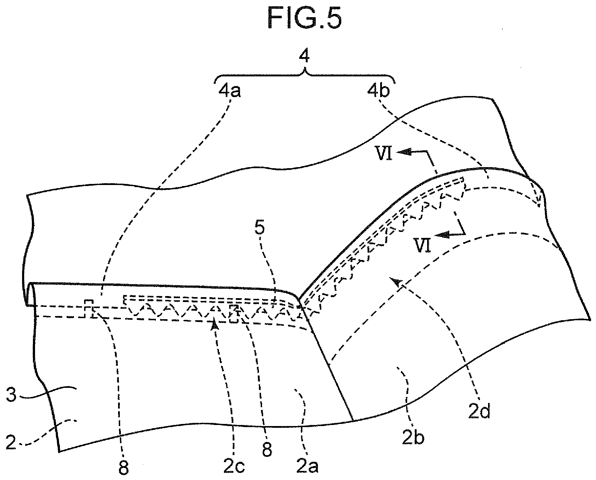

As shown in FIG. 5, the holding member 5 is fixed to a part of inward-suspending portion 4 that continuously extends from the flat surface portion 2a to the curved surface portion 2b of the pad 2, that is, fixed to the straight portion 4a and the curved portion 4b. In this embodiment, as shown in FIG. 6, the plate portion 5a of the holding member 5 is sewn onto the inward-suspending portion 4 of the outer cover 3 along the whole length of the plate portion 5a. This creates the sewn portion 6. The holding member 5 and its sewn portion 6 are disposed in such a way as to extend in parallel with a sewn portion 7 for forming the inward-suspending portion 4 of the outer cover 3 (that is, in such a way as to extend in parallel with the direction perpendicular to the paper surface of FIG. 6). It is preferable that the reinforcing portion 5b of the holding member 5 be located close to the sewn portion 7 of the inward-suspending portion 4.

The plate portion 5a of the holding member 5, the plate portion 5a extending along the shape of the pad 2, is fixed to the inward-suspending portion 4 of the outer cover 3 by the sewn portion 6 in such a way as to conform to the shape of the outer cover. In other words, on the curved surface portion 2b of the pad 2, as the holding member 5 is bent along the curved surface of the curved surface portion 2b with allowing restitutive deformation of the holding member 5, the plate portion 5a is sewn onto the part of inward-suspending portion 4 that corresponds to the curved portion 4b along the shape of the outer cover. As a result, the restitutive force of the holding member 5 (specifically, the restitutive force of the reinforcing portion 5b) allows the curved portion 4b of the inward-suspending portion 4 to extend in a curved shape along the curved surface portion 2b of the pad 2.

### (Features of This Embodiment)

(1) According to the seat 1 configured in the above manner, as shown in FIGS. 5 to 8, the inward-suspending portion 4 of the outer cover 3 is fixed only to the flat surface portion 2a of the pad 2, and is disposed on the curved surface portion 2b in a state of the inward-suspending portion 4 being bent together with the holding member 5 along the curved surface of the curved surface portion 2b. In other words, the inward-suspending portion 4 of the outer cover 3 extends continuously from the curved surface portion 2b to the flat surface portion 2a of the pad 2, the curved surface portion 2b and the flat surface portion 2a being different in curvature radius from each other. The holding member 5 having bending-allowing elasticity is fixed to the straight portion 4a and the curved portion 4b of the inward-suspending portion 4 of the outer cover 3, the straight portion 4a and curved portion 4b extending continuously from the curved surface portion 2b to the flat surface portion 2a of the pad 2.

The inward-suspending portion 4 is fixed only to the flat surface portion 2a (i.e., the surface with a larger curvature radius) of the pad 2, specifically, to the groove 2c of the flat surface portion 2a. Specifically, the straight portion 4a of the inward-suspending portion 4, the straight portion 4a extending along the groove 2c of the flat surface portion 2a of the pad 2, is fastened to a metal bar or the like inside the pad 2, the metal bar being near the bottom wall of the groove 2c, by using a fixing member 8, such as a hogring shown in FIG. 5 (see FIG. 5). This creates an inward-suspending shape extending along the flat surface portion 2a. Meanwhile, the curved portion 4b of the inward-suspending portion 4, the curved portion 4b extending along the space 2d of the curved surface portion 2b of the pad 2, is disposed on the curved surface portion 2b in a state of the curved portion 4b being bent together with the holding member 5 along the curved surface of the curved surface portion 2b with a smaller curvature radius.

Specifically, the outer cover 3 is stretched over the curved surface portion 2b of the pad 2 in such a way as to keep the outer cover 3 in a tensioned state, and the peripheral edge of the outer cover 3 is fixed to a side surface or the back surface of the pad 2. At this time, the tension of the outer cover 3 is cut off by the slit S near the inward-suspending portion 4, and therefore the tension does not directly act on the inward-suspending portion 4 (which means that the tension of the outer cover 3 is cut off from the inward-suspending portion 4). As a result, the shape retaining force of the outer cover 3 itself and the tension (restitutive force) of the holding member 5 work to cause the outer cover 3 to move downward inside the space 2d. Hence a natural inward-suspending shape is created.

In this manner, in the inward-suspending portion 4, the straight portion 4a on the flat surface portion 2a side is fixed to the flat surface portion 2a of the pad 2; on the other hand, the curved portion 4b on the curved surface portion 2b side is not fixed to the curved surface portion 2b but is held in a shape conforming to the curved surface of the curved surface portion 2b because of the restitutive force of the holding member 5 in its bent state. In other words, the curved portion 4b being on the curved surface portion 2b side of the inward-suspending portion 4, is caused to move into the space 2d of the curved surface portion 2b of the pad 2 by the holding member 5 in the bent state. Thus, even when the curved surface of the pad 2 is not supported, the inward-suspending shape can be created.

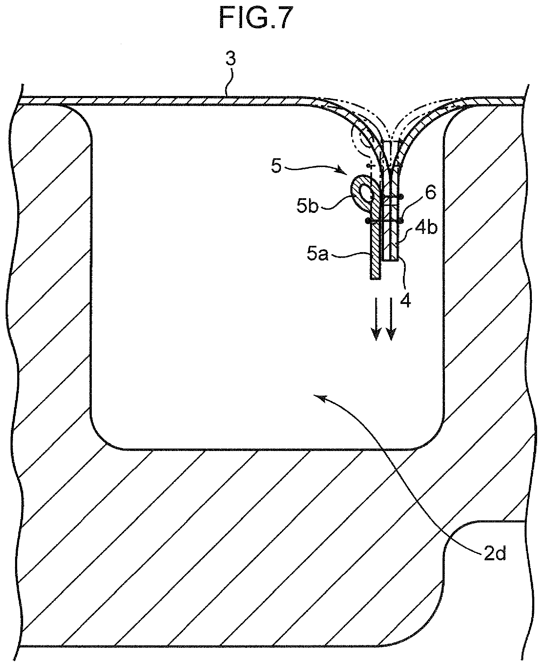

(2) According to the seat 1 of this embodiment, as shown in FIG. 7, the space 2d is formed on the curved surface portion 2b of the pad 2 as the recess corresponding to the inward-suspending portion 4, the space 2d being necessary for creating the inward-suspending shape. The space 2d has the size that allows the inward-suspending portion 4 to move into the space 2d by means of the holding member 5 with the inward-suspending portion 4 receiving the restitutive force of the holding member 5.

In this configuration, the inward-suspending portion 4 receiving the restitutive force of the holding member 5 is allowed to move into the space 2d formed on the curved surface portion 2b of the pad 2. Using the restitutive force of the holding member 5 effectively, therefore, the inward-suspending portion 4 can be formed into the shape conforming to the curved surface of the curved surface portion 2b and be held in such a shape.

As the recess corresponding to the inward-suspending portion 4 formed on the curved surface portion 2b, a through-hole or a slit penetrating the pad 2 from the front to the back thereof may be formed in place of the space 2d with a bottom shown in FIG. 7. Such a case offers the same effects as described above.

According to this embodiment, in particular, on the part of outer cover 3 that covers the curved surface portion 2b (first surface) of the pad 2, the slit S, into which the metal fitting for fitting the child seat can be inserted, is formed in the place near the inward-suspending portion 4. In addition, the space 2d, in which the child seat fitting portion connectable to the metal fitting can be placed, is formed as the recess. It is thus possible in this configuration that, on the curved surface portion 2b (first surface) of the pad 2, the space 2d, in which the child seat fitting portion can be placed, is secured as the inward-suspending portion 4 is formed into the shape conforming to the curved surface of the curved surface portion 2b, using the restitutive force of the holding member 5 effectively, and is held in such a shape.

(3) According to the seat 1 of this embodiment, the flat surface portion 2a formed of a flat surface is adopted as the second surface of the pad 2 of the present invention. In this configuration, when the pad 2 has the curved surface portion 2b formed of a curved surface and the flat surface portion 2a formed of a flat surface, the inward-suspending portion 4 is fixed to the flat surface of the flat surface portion 2a of the pad 2, and at the same time, the inward-suspending portion 4 is held in the shape conforming to the curved surface of the curved surface portion 2b by the restitutive force of the holding member 5. As a result, in the case where the pad 2 includes both the flat surface and the curved surface, the inward-suspending shape extending continuously along the curved surface and the flat surface can be created.

(4) According to the seat 1 of this embodiment, the holding member 5 has the plate portion 5a that extends along the inward-suspending portion 4 and that is fixed in surface contact with the inward-suspending portion 4. The plate portion 5a has the slits or recesses 5d that allow the plate portion 5a to be bent along the curved surface of the curved surface portion 2b.

In this configuration, because the plate portion 5a of the holding member 5 has the slits or the recesses 5d, these slits or the recesses 5d provide a space for movement along the surface of the plate portion 5a when the plate portion 5a is bent. This allows the plate portion 5a of the holding member 5 to be bent and fixed along the curved surface of the curved surface portion 2b in a state of the plate portion 5a being in surface contact with the inward-suspending portion 4. The holding member 5 is thus able to surely hold the inward-suspending portion 4 in the shape conforming to the curved surface of the curved surface portion 2b.

(5) According to the seat 1 of this embodiment, the holding member 5 has the reinforcing portion 5b for reinforcing the plate portion 5a which is continuously connected to the plate portion 5a along its longitudinal direction.

In this configuration, because the holding member 5 has the reinforcing portion 5b for reinforcing the plate portion 5a, the holding member 5 can be bent along the first curved surface without causing the plate portion 5a to buckle or wrinkle. Thus, the holding member 5 moves to a position at which the tension of the reinforcing portion 5b acts on a shape fixed by the plate portion 5a, specifically, a shape along the curved surface, thus being able to surely hold the inward-suspending portion 4 in the shape conforming to the curved surface of the curved surface portion 2b.

### (Modifications)

In the above embodiment, the holding member 5 has the plate portion 5a and the reinforcing portion 5b of a cylindrical shape. The holding member 5 of the present invention, however, is not limited to this configuration. The holding member 5 may be composed of a linear member, a cylindrical member, or the like without having the plate portion 5a. In such a case, the linear member or the cylindrical member may be fixed to the inward-suspending portion 4 by bonding or the like.

### <Summary of Embodiment>

The above embodiment is summarized as follows.

A seat of this embodiment comprises: a pad having a first surface formed of a curved surface with a given curvature radius and a second surface formed of a curved surface with a curvature radius larger than that of the first surface or formed of a flat surface; an outer cover that covers the pad, the outer cover having an inward-suspending portion projecting from a side facing the pad toward the pad and inwardly suspended in the pad; and a holding member having bending-allowing elasticity, the holding member holding a shape of the inward-suspending portion (specifically, a shape of the inward-suspending portion and of the outer cover around the inward-suspending portion), wherein the inward-suspending portion extends continuously from the first surface to the second surface of the pad, wherein the holding member is fixed to a part of the inward-suspending portion, the part extending continuously from the first surface to the second surface of the pad, and wherein the inward-suspending portion is fastened only to the second surface of the pad, and is disposed on the first surface in a state of the inward-suspending portion being bent together with the holding member along the curved surface of the first surface.

According to this configuration, the inward-suspending portion of the outer cover extends continuously from the first surface to the second surface of the pad, the first surface and the second surface being different in curvature radius from each other. The holding member having bending-allowing elasticity is fixed to the part of the inward-suspending portion of the outer cover, the part extending continuously from the first surface to the second surface of the pad. Because the inward-suspending portion is fixed only to the second surface (that is, the surface with a larger curvature radius) of the pad, an inward-suspending shape conforming to the second surface is formed, and the inward-suspending portion is disposed along the curved surface of the first surface with a smaller curvature radius in a state of the inward-suspending portion being bent together with the holding member. Accordingly, the inward-suspending portion is fixed to the second surface of the pad; while, in spite of not being fixed to the first surface, the inward-suspending portion is held in a shape conforming to the curved surface of the first surface because of a restitutive force of the holding member in its bent state. Thus, even when the curved surface of the pad is not supported, the inward-suspending shape can be created.

On the above seat, a recess corresponding to the inward-suspending portion is formed on the first surface of the pad, and the recess should preferably have a size that allows the inward-suspending portion to move into the recess by means of the holding member with the inward-suspending portion receiving the restitutive force of the holding member.

In this configuration, the inward-suspending portion receiving the restitutive force of the holding member is allowed to move into the recess formed on the first surface of the pad. Using the restitutive force of the holding member effectively, therefore, the inward-suspending portion can be formed into the shape conforming to the curved surface of the first surface and be held in such a shape.

According to the seat described above, on a part of outer cover that covers the first surface, a slit, into which a metal fitting for fitting a child seat to the seat is inserted, is formed in a place near the inward-suspending portion, and the recess has a space in which a child seat fitting portion connectable to the metal fitting can be placed. It is preferable that the space has a size that allows the inward-suspending portion to move into the space by means of the holding member with the inward-suspending portion receiving the restitutive force of the holding member.

In this configuration, on the part of outer cover that covers the first surface, the slit, into which the metal fitting for fitting the child seat can be inserted, is formed in the place near the inward-suspending portion, and the recess has the space in which the child seat fitting portion connectable to the metal fitting can be placed. In this configuration, the inward-suspending portion receiving the restitutive force of the holding member is allowed to move into the space formed on the first surface of the pad. It is thus possible that the space in which the child seat fitting portion can be placed is provided on the first surface of the pad as the inward-suspending portion is formed into the shape conforming to the curved surface of the first surface, using the restitutive force of the holding member effectively, and is held in such a shape.

It is preferable that on the above seat, the second surface be formed of a flat surface.

In this configuration, when the pad has the first surface formed of a curved surface and the second surface formed of a flat surface, the inward-suspending portion is fixed to the flat surface of the second surface of the pad; while, the inward-suspending portion is held in the shape conforming to the curved surface of the first surface by the restitutive force of the holding member. As a result, in the case where the pad includes both the flat surface and the curved surface, an inward-suspending shape extending continuously along the curved surface and the flat surface can be created.

According to the above seat, the holding member has a plate portion that extends along the inward-suspending portion and that is fixed in surface contact with the inward-suspending portion. Therefore, the plate portion should preferably have a slit or a recess that allows the plate portion to be bent along the curved surface of the first surface.

In this configuration, having the slit or the recess, the plate portion of the holding member can be bent and fixed along the curved surface of the first surface in a state of the plate portion being in surface contact with the inward-suspending portion. The holding member is thus able to hold the inward-suspending portion certainly in the shape conforming to the curved surface of the first surface.

According to the seat described above, it is preferable that the holding member have a reinforcing portion for reinforcing the plate portion that is continuously connected to the plate portion along its longitudinal direction.

In this configuration, because the holding member has the reinforcing portion reinforcing the plate portion, the holding member can be bent along the first curved surface without causing the plate portion to buckle or wrinkle. As a result, the holding member moves to a position at which the tension of the reinforcing portion acts on a shape fixed by the plate portion, specifically, a shape along the curved surface, thus being able to surely hold the inward-suspending portion in the shape conforming to the curved surface of the first surface.

According to the seat of this embodiment, an inward-suspending shape conforming to the curved surface of the pad can be created.

## Claims

1. A seat comprising:
a pad having a first surface formed of a curved surface with a given curvature radius and a second surface formed of a curved surface with a curvature radius larger than that of the first surface or formed of a flat surface;
an outer cover that covers the pad, the outer cover having an inward-suspending portion projecting from a side facing the pad toward the pad and inwardly suspended in the pad; and
a holding member having bending-allowing elasticity, the holding member holding a shape of the inward-suspending portion,
wherein the inward-suspending portion extends continuously from the first surface to the second surface of the pad,
the holding member is fixed to a part of the inward-suspending portion, the part extending continuously from the first surface to the second surface of the pad, and
the inward-suspending portion is fastened only to the second surface of the pad, and is disposed on the first surface in a state of the inward-suspending portion being bent together with the holding member along the curved surface of the first surface.

2. The seat according to claim 1, wherein
a recess corresponding to the inward-suspending portion is formed on the first surface of the pad, and
the recess has a size that allows the inward-suspending portion to move into the recess by means of the holding member with the inward-suspending portion receiving the restitutive force of the holding member.

3. The seat according to claim 2, wherein
a slit into which a metal fitting for fitting a child seat to the seat is inserted is formed in a place near the inward-suspending portion on a part of the outer cover, the part covering the first surface,
the recess has a space in which a child seat fitting portion connectable to the metal fitting is placed, and
the space has a size that allows the inward-suspending portion to move into the space by means of the holding member with the inward-suspending portion receiving the restitutive force of the holding member.

4. The seat according to any one of claims 1 to 3, wherein the second surface is formed of a flat surface.

5. The seat according to any one of claims 1 to 4, wherein
the holding member has a plate portion that extends along the inward-suspending portion and that is fixed to the inward-suspending portion in a state of the holding member being in surface contact with the inward-suspending portion, and
the plate portion has a slit or a recess that allows the plate portion to be bent along a curved surface of the first surface.

6. The seat according to claim 5, wherein the holding member has a reinforcing portion for reinforcing the plate portion that is continuously connected to the plate portion along a longitudinal direction of the plate portion.
